# EUROPÄISCHE PATENTSCHRIFT

(11) **EP 3 398 810 B1**
(45) Veröffentlichungstag und Bekanntmachung des Hinweises auf die Patenterteilung: **19.08.2020**
(21) Anmeldenummer: 18000047.3
(22) Anmeldetag: 22.01.2018
(51) Int. Cl.: B60P 1/64, B62D 21/14, B62D 21/20, B62D 25/20, B62D 53/06, B60R 19/56, B62D 25/16

(54) **KOMPAKTHECK AN NUTZFAHRZEUGEN MIT AUSFAHRBAREM HECK**
COMPACT REAR END OF UTILITY VEHICLES WITH EXTENDIBLE REAR END
PARTIE ARRIÈRE COMPACT DE VÉHICULES UTILITAIRES POURVU DE PARTIE ARRIÈRE POUVANT ÊTRE SORTIE

(30) Priorität: 21.04.2017 DE 202017002097 U
(43) Veröffentlichungstag der Anmeldung: 07.11.2018
(73) Patentinhaber: Fahrzeugwerk Bernard Krone GmbH & Co. KG, 49757 Werlte (DE)
(72) Erfinder: Josefowitsch, Ulrich, 01731 Kreischa (DE)
(74) Vertreter: Pott, Ulrich

(56) Entgegenhaltungen:
- EP-A1- 2 113 414
- WO-A1-2006/063394
- CN-A- 102 582 553
- GB-A- 2 089 737
- GB-A- 2 542 160
- US-A- 4 836 735
- US-A- 5 673 953
- US-B1- 9 422 015

## Beschreibung

Die Erfindung bezieht sich auf ein Nutzfahrzeugchassis mit einem Radachsen mit zugeordneten Rädern, Längstraversen und Quertraversen umfassenden Fahrgestellrahmen, von denen eine den Fahrgestellrahmen heckseitig abschließenden Heckquertraverse Teil eines Fahrgestellrahmenhecks ist und die Heckquertraverse und zumindest eine weitere Quertraverse Verriegelungselemente zur Verriegelung einer Nutzlast, insbesondere eines Containers, aufweisen, wobei das die Hecktraverse umfassende Fahrgestellrahmenheck als Kompaktheck mit einem unterhalb der Heckquertraverse angeordneten, einen Balken aufweisenden Unterfahrschutz ausgebildet ist, wobei sich die Hecktraverse mit ihren Verriegelungen zumindest bereichsweise oberhalb von heckseitigen Rädern und/oder von heckseitigen Rädern zugeordneten Radabdeckungen erstreckt, wobei der Balken des Unterfahrschutzes bereichsweise unmittelbar hinter heckseitigen Rädern und/oder hinter den heckseitigen Rädern zugeordneten Radabdeckungen angeordnet ist und wobei der Balken des Unterfahrschutzes über zumindest drei Verbindungselemente mit der Heckquertraverse verbunden ist.

Beim Transport von Gütern durch Nutzfahrzeuge ist anerkannt, dass die zulässige Nutzlast des Nutzfahrzeuges nicht überschritten werden darf, um die Verkehrs- und Betriebssicherheit nicht zu beeinträchtigen.

Dabei ist die Lastverteilung von besonderer Bedeutung. Gleichwohl bedarf es bei der Beladung des Nutzfahrzeuges nicht ausschließlich der Berücksichtigung der maximalen Nutzlast, sondern auch einer exakten Positionierung der Nutzlast auf der entsprechenden Ladefläche, also dem Nutzfahrzeugchassis mit seinem Fahrgestellrahmen.

Die Positionierung der Nutzlast auf der Ladefläche ist unter anderem abhängig von dem Schwerpunkt der Nutzlast, den zulässigen Achslasten und der sogenannten Sattellast, also der Last, die auf der Sattelkupplung der Zugmaschine liegt. Sowohl für die Sattellast als auch für die Antriebsachslast sind die gesetzlichen Vorschriften einzuhalten.

Für den grenzüberschreitenden Verkehr wird gefordert, dass die Antriebsachsen der Zugmaschine nicht mit weniger als 25 % des Gesamtgewichts des Nutzfahrzeuges belastet sein dürfen. Es kann bei einer ungünstigen Positionierung der Nutzlast zu einer Über- oder Unterschreitung der zulässigen Lasten kommen, obwohl die zulässige Nutzlast nicht überschritten wurde. Eine Achslastüberschreitung kann beispielsweise Schäden an Reifen und Achsen hervorrufen. Sattellastunterschreitungen hingegen wirken sich maßgeblich auf das Lenkverhalten oder ein Anfahrverhalten des Nutzfahrzeuges aus.

Es sind verschiedene Nutzfahrzeugchassis für den Containertransport bekannt, um die gesetzlichen Vorschriften für die Lastverteilung speziell für den Transport eines 20'-Containers einzuhalten. Der technische Aufwand der angebotenen Containerfahrgestelle mit entsprechenden Lösungsmöglichkeiten ist jedoch relativ hoch.

So ist beispielsweise ein Nutzfahrzeugchassis für den Containertransport bekannt, das einen Fahrgestellrahmen für eine flexible Lastverteilung ermöglicht. Dabei werden zwei Fahrgestellrahmen ineinander verschoben, um die Position des geladenen Containers zu verändern. Solche Containerfahrgestelle, die in einander zu verschieben sind, werden als Sliding-Bogie-Trailer bezeichnet. Die mittige Transportstellung ermöglicht eine gleichmäßige Verteilung der Last auf die Achsen des Nutzfahrzeugchassis sowie des Zugfahrzeuges. Zum Be- und Entladen des Inhaltes eines Containers können die Fahrgestellrahmen bei beladenen Containern ineinander verschoben werden, so dass der Container heckbündig an eine Verladerampe herangefahren werden kann.

Darüber hinaus ist ein anderes Nutzfahrzeugchassis bekannt mit einem teleskopierbaren Fahrgestellrahmen. Dabei sind Längstraversen eines vorderen Teils des Fahrgestellrahmens in offene Längstraversen eines hinteren Teils des Fahrgestellrahmens zu teleskopieren. Nach Einnahme der gewählten Teleskopierstellung nach Beladung des Nutzfahrzeugs mit einem Container ist ein Positionswechsel des geladenen Containers allerdings nicht mehr möglich. Wird daher für eine gewählte Transportstellung eine gleichmäßige Lastverteilung auf die Achsen des Fahrgestells und des Zugfahrzeuges realisiert, bei der der geladene Container einen Abstand zum Fahrgestellrahmenheck aufweist, ist ein Positionswechsel des Containers nach dem Aufsetzen des Containers nicht mehr möglich. Eine heckbündige Positionierung zur Entladung kann daher nicht mehr eingenommen werden, wenn zuvor der Container für die Transportstellung nicht heckbündig geladen wurde.

Aus der EP 2 113 414 A1, der US 4 836 735 A, der GB 2 542 160 A und der US 9 422 015 B1 sind Nutzfahrzeugchassis der eingangs genannten Art bekannt. Diese sind hinsichtlich des Unterfahrschutzes jedoch nicht so gestaltet, dass mit diesen die gesetzlichen Vorschriften für einen Unterfahrschutz einzuhalten sind. Dazu wäre jeweils noch eine Vielzahl weiterer Bauteile erforderlich, die sich auf die Gesamtgestehungskosten der dortigen Nutzfahrzeugchassis nachteilig auswirken.

Es ist Aufgabe der vorliegenden Erfindung, ein Nutzfahrzeugchassis zur Verfügung zu stellen, das eine heckbündige Be- und Entladung einer Nutzlast, insbesondere eines Containers, ermöglicht, das darüber hinaus jedoch auch in kostengünstiger Bauweise eine verbesserte Lastverteilung ermöglicht. Darüber hinaus sollen die gesetzlichen Rahmenbedingungen für einen Unterfahrschutz berücksichtigt sein.

Zur Lösung dieser Aufgabe zeichnet sich das Fahrzeugchassis der eingangs genannten Art dadurch aus, dass zumindest zwei der Verbindungselemente in einem Seitenaußenbereich der Heckportals und des Balkenunterfahrschutzes an dem Balken angreifen und in einem mittleren Bereich des Balkens des Unterfahrschutzes zumindest ein weiteres Verbindungselement der Heckquertraverse mit dem Balken des Unterfahrschutzes verbunden ist.
Damit ist ein Nutzfahrzeugchassis geschaffen, bei dem durch die kompakte Bauweise des Fahrgestellrahmenhecks als Kompaktheck die hintere Verriegelungsposition der Nutzlast, insbesondere also des Containers, sehr nahe an der letzten Achse der heckseitigen Räder platziert werden kann. Gleichwohl ist das Kompaktheck konstruktiv so zu gestalten, dass eine heckbündige Be- und Entladung des Containers realisiert werden kann. Aufgrund der engen Platzierung eines Containers an der letzten Achse ist darüber hinaus die Lastverteilung auch bei heckbündiger Be- und Entladungsmöglichkeit des Containers wesentlich verbessert, da der Abstand des Schwerpunktes der Last (Ladung) vom Mittelpunkt des Achsaggregates vergrößert ist, wodurch die Sattellast erhöht wird.

Darüber hinaus ist nur eine geringe Anzahl von Bauteilen notwendig. Daher ist diese erfindungsgemäße Gestaltung des Nutzfahrzeugchassis wesentlich kostengünstiger und weniger verschleißanfällig im Vergleich zu verschiebbaren Fahrgestellen insgesamt. Dies ist insbesondere im Bereich des Containertransportes von wesentlichem Vorteil, da die Beanspruchung von Containerfahrgestellen bei der Verladung von Containern auf z. B. verschiedene Fahrgestelle sehr hoch ist.

Trotz der Bauweise als Kompaktheck ist es aufgrund des vorgesehenen Balkens des Unterfahrschutzes möglich, die gesetzlichen Regelungen für einen Unterfahrschutz einzuhalten. Dieser Balken des Unterfahrschutzes erstreckt sich im Wesentlichen heckbündig mit dem Heckportal und ist so nahe an die letzten Räder bzw. an die Radabdeckungen der letzten Räder heranzubewegen, dass sich diese nahezu über die gesamte Breite des Nutzfahrzeugchassis erstreckt. Da der Balken des Unterfahrschutzes wesentlich dünner auszubilden ist als das Heckportal, kann sich das Heckportal zumindest teilweise oberhalb der letzten Räder bzw. oberhalb der Radabdeckungen der letzten Räder erstrecken, da der Balken des Unterfahrschutzes auch mit vertikalem Lageabstand unterhalb des Heckportals gelegen ist. Damit ist eine nahezu heckbündige Beladung des Nutzfahrzeugchassis möglich bzw. kann das Heckportal verschieblich so in den Fahrgestellrahmen des Nutzfahrzeuges eingefahren werden, dass ein Container heckbündig be- und entladen werden kann. Gleichwohl ist mit baulich einfachen Mitteln ein den gesetzlichen Vorschriften Genüge tuender Unterfahrschutz vorgesehen. Dazu baut der Balken des Unterfahrschutzes wesentlich dünner als das Heckportal. Um den Anforderungen eines Unterfahrschutzes zu genügen, ist dieser an zumindest drei Stellen mit dem Heckportal verbunden, nämlich in den beiden Außenbereichen und in einem Mittelbereich, wobei bevorzugt wird, wenn der Unterfahrschutz über zumindest vier Konsolen als Verbindungselemente mit dem Heckportal verbunden sind.

Weitere vorteilhafte Ausgestaltungen ergeben sich aus weiteren Unteransprüchen, der nachfolgenden Beschreibung und der Zeichnung. In der Zeichnung zeigen:
- Fig. 1: In einer perspektivischen Darstellung ein Ausführungsbeispiel eines Nutzfahrzeugchassis mit eingeschobenem Kompaktheck in einer Ansicht schräg von vorne oben im eingeschobenen Zustand;
- Fig. 2: das Ausführungsbeispiel nach Fig. 1 in einer perspektivischen Teilansicht schräg von hinten;

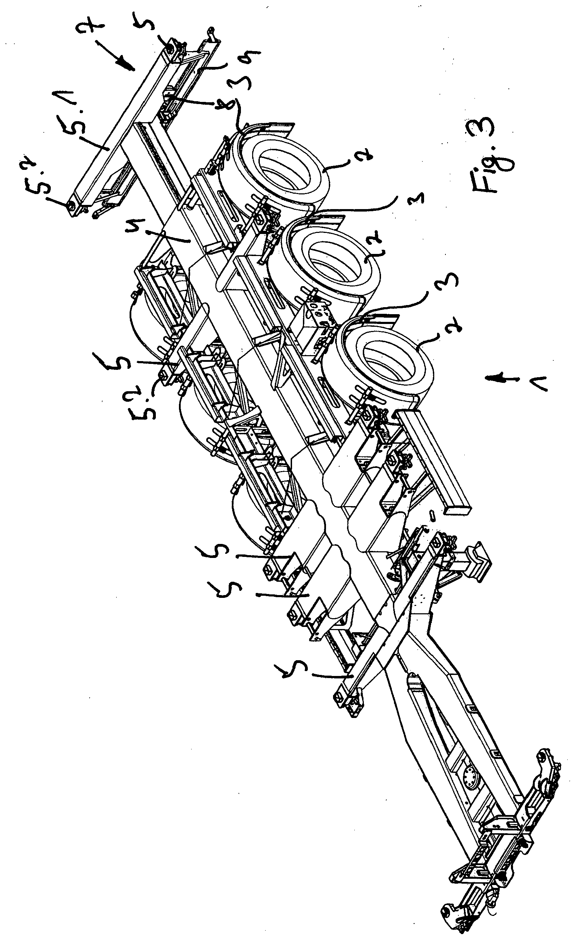

- Fig. 3: das Ausführungsbeispiel nach Fig. 1 in einer analogen perspektivischen Darstellung mit einem ausgeschobenen Kompaktheck;

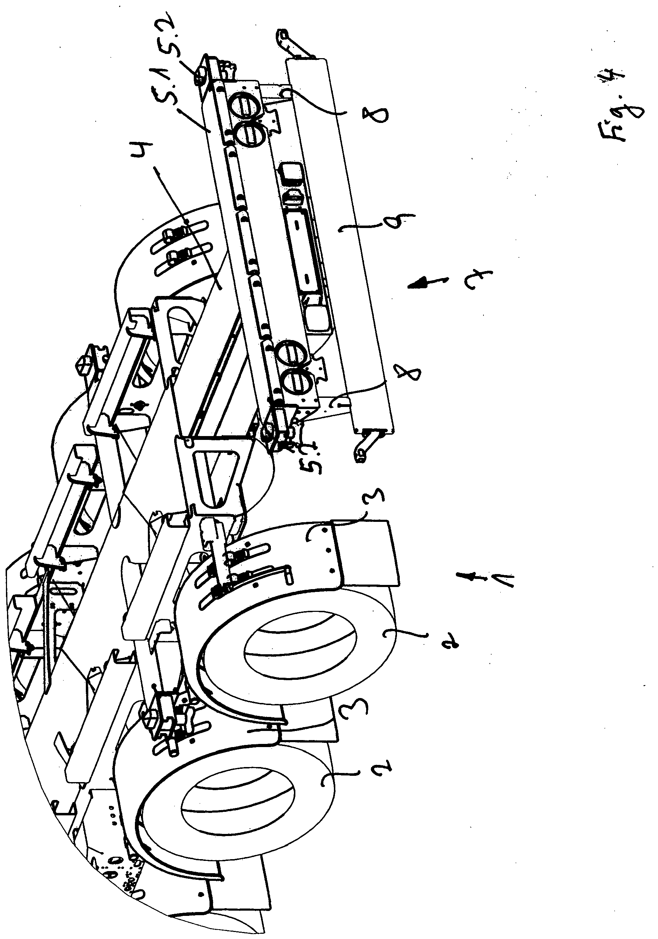

- Fig. 4: eine zu Fig. 2 analoge Darstellung des Ausführungsbeispiels nach Fig. 3 mit ausgeschobenem Kompaktheck;
- Fig. 5: in einer analogen Darstellung zu dem Ausführungsbeispiel nach Fig. 1 dieses Ausführungsbeispiel mit Darstellung eines geladenen Containers;
- Fig. 6: eine zu Fig. 3 analoge Darstellung mit ausgezogenem Fahrgestell und ausgezogenem Heckportal mit geladenen Zweicontainern;
- Fig. 7: eine Seitendarstellung auf das Ausführungsbeispiel nach Fig. 1 mit eingeschobenem Heckportal, und

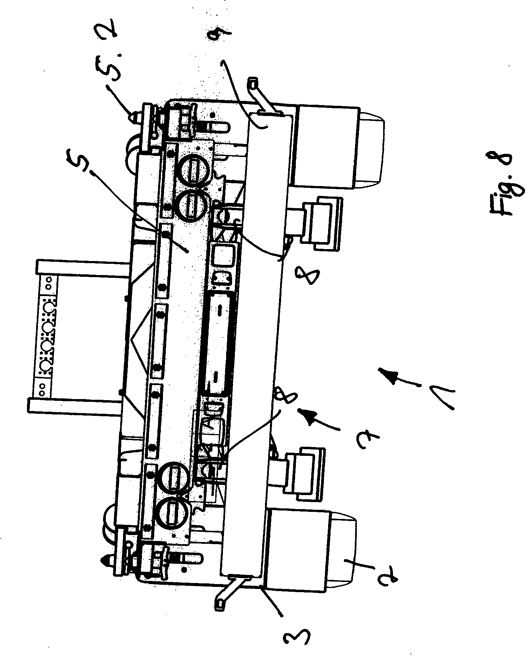

- Fig. 8: das Ausführungsbeispiel nach den Fig. 1 und 7 in einer Ansicht von hinten.

In der Zeichnung sind grundsätzlich übereinstimmende Teile mit übereinstimmenden Bezugsziffern versehen.

In den Figuren ist allgemein mit 1 ein Nutzfahrzeugchassis beziffert, das in dem gezeigten Ausführungsbeispiel drei Radachsen mit zugeordneten Rädern 2 aufweist und Radabdeckungen 3 hat und Quertraversen 5 unter Einschluss einer Hecktraverse 5.1 sowie eine Längstraverse 4. Die Quertraversen 5 unter Einschluss der Hecktraverse 5.1 weisen Verriegelungselemente 5.2 auf.

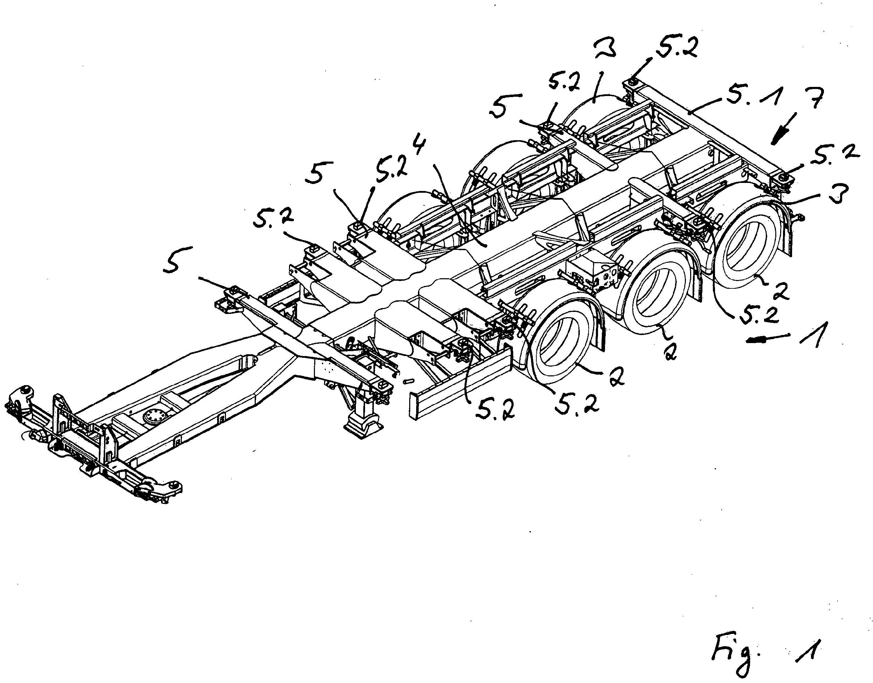

Das Ausführungsbeispiel des Nutzfahrzeugchassis 1 hat ein allgemein mit 7 beziffertes Kompaktheck, das nicht starr und mithin verschieblich ausgebildet ist. Fig. 1 zeigt, dass dieses Kompaktheck 7 so ausgebildet ist, dass es im eingeschobenen Zustand ganz nah an den heckseitigen Rädern 2 angeordnet ist und sich bereichsweise oberhalb des rückwärtigen Bereiches der heckseitigen Radabdeckung 3 befindet.

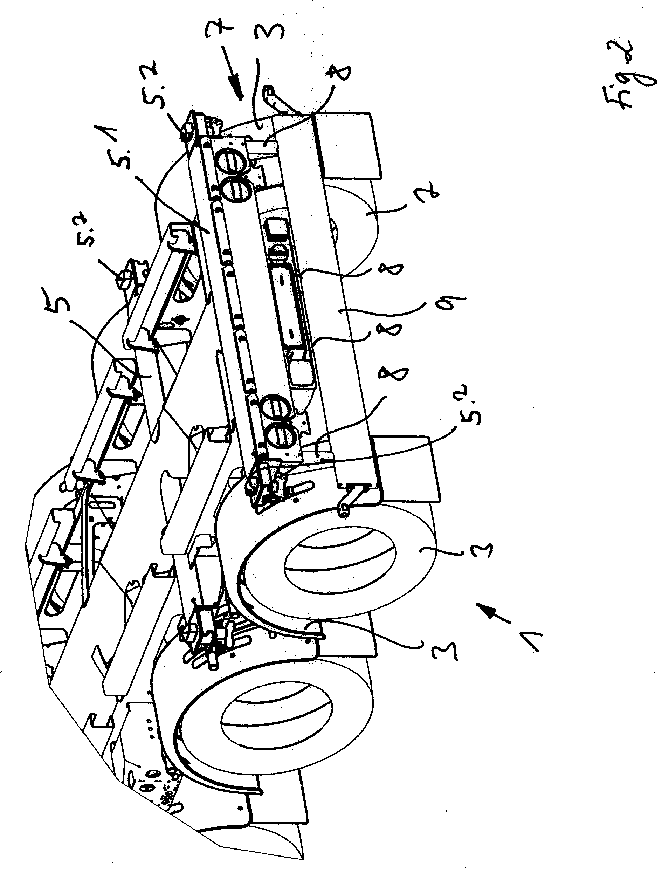

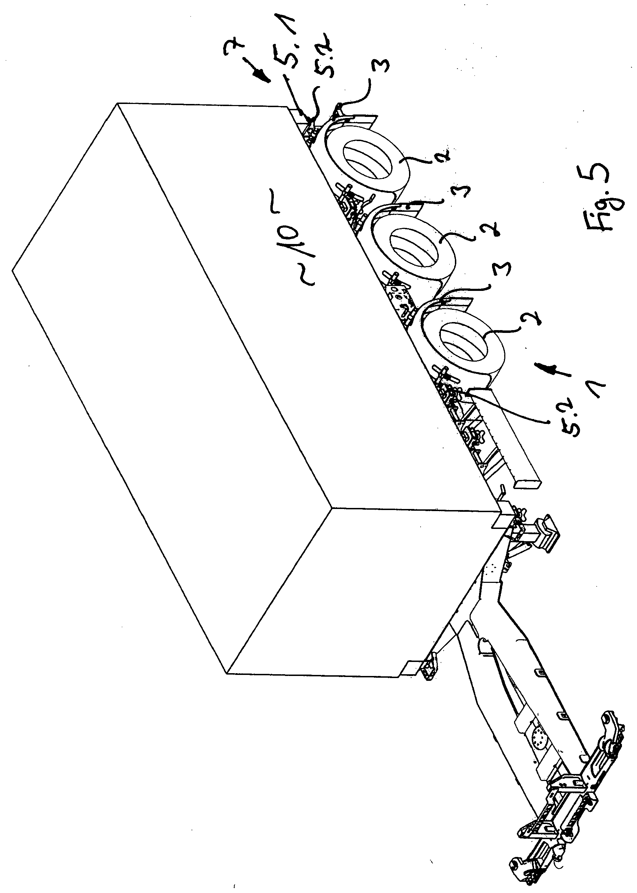

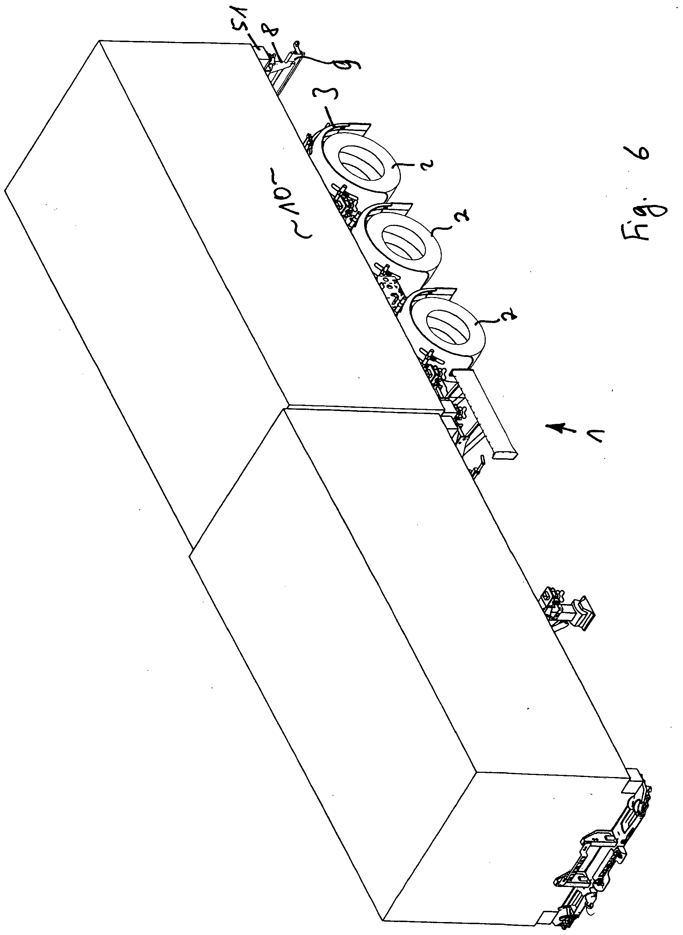

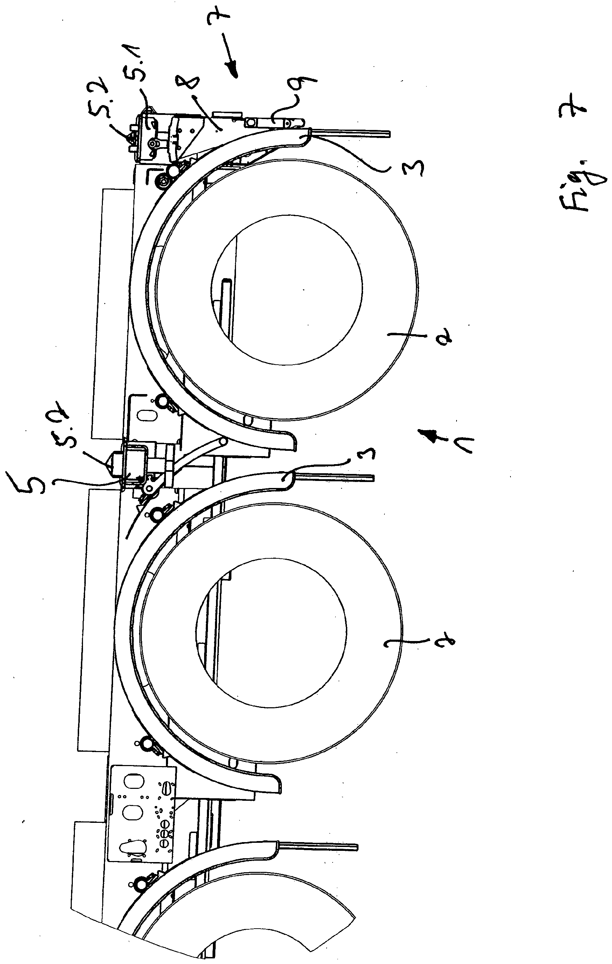

In Fig. 2 ist das Nutzfahrzeugchassis 1 im eingeschobenen Zustand des Kompaktheckes 7 gezeigt. Es wird deutlich, dass sich die Heckquertraverse 5.1 mit ihren Verriegelungen 5.2 oberhalb der heckseitigen Radabdeckungen 3 befindet. Über insgesamt vier Konsolen 8 ist an der Heckquertraverse 5.1 ein Balken 9 eines Unterfahrschutzes befestigt, der sich in dem dargestellten Ausführungsbeispiel ganz nah hinter den heckseitigen Radabdeckungen 3 befindet. Dieser Balken 9 ist wesentlich dünner ausgebildet als der über ihm befindliche Heckportalbalken 5.1, schließt jedoch heckbündig (Fig. 7) mit diesem ab, so dass sich ein sich über die gesamte Breite des Nutzfahrzeugchassis 1 erstreckender Unterfahrschutz in Gestalt des Balkens 9 ergibt, jedoch ein Container 10, wie in den Fig. 5 und 6 dargestellt, heckbündig mit dem Nutzfahrzeugchassis 1 abschließen kann.

Die weiteren Figuren veranschaulichen das, was zuvor beschrieben ist und in den Ansprüchen definiert wurde.

## Patentansprüche

1. Nutzfahrzeugchassis (1) mit einem Radachsen mit zugeordneten Rädern (2) Längstraversen (4) und Quertraversen (5) umfassenden Fahrgestellrahmen, von denen eine den Fahrgestellrahmen heckseitig abschließenden Heckquertraverse (5.1) Teil eines Fahrgestellrahmenhecks (7) ist und die Heckquertraverse (5.1) und zumindest eine weitere Quertraverse (5) Verriegelungselemente (5.2) zur Verriegelung einer Nutzlast (10), insbesondere eines Containers, aufweisen, wobei das die Hecktraverse (5.1) umfassende Fahrgestellrahmenheck (7) als Kompaktheck mit einem unterhalb der Heckquertraverse (5.1) angeordneten, einen Balken (9) aufweisenden Unterfahrschutz ausgebildet ist, wobei sich die Hecktraverse (5.1) mit ihren Verriegelungen (5.2) zumindest bereichsweise oberhalb von heckseitigen Rädern (2) und/oder von heckseitigen Rädern (2) zugeordneten Radabdeckungen (3) erstreckt, wobei der Balken (9) des Unterfahrschutzes bereichsweise unmittelbar hinter heckseitigen Rädern (2) und/oder hinter den heckseitigen Rädern (2) zugeordneten Radabdeckungen (3) angeordnet ist und wobei der Balken (9) des Unterfahrschutzes über zumindest drei Verbindungselemente (8) mit der Heckquertraverse (5.1) verbunden ist,p **dadurch gekennzeichnet, dass** zumindest zwei der Verbindungselemente (8) in einem Seitenaußenbereich der Heckportals und des Balkenunterfahrschutzes an dem Balken (9) angreifen und in einem mittleren Bereich des Balkens (9) des Unterfahrschutzes zumindest ein weiteres Verbindungselement der Heckquertraverse (5) mit dem Balken (9) des Unterfahrschutzes verbunden ist.

2. Nutzfahrzeugchassis (1) nach Anspruch 1, **dadurch gekennzeichnet, dass** der Balken (9) des Unterfahrschutzes dünner als die Heckquertraverse (5.1) ausgebildet ist und der Balken (9) heckseitig heckbündig zumindest annähernd mit der Heckquertraverse (5.1) abschließt.

3. Nutzfahrzeugchassis (1) nach einem der Ansprüche 1 bis 2, **dadurch gekennzeichnet, dass** der Balken (9) des Unterfahrschutzes über seine gesamte Länge und damit über die Breite des Nutzfahrzeugchassis (1) eine gleichmäßige Dicke hat.

4. Nutzfahrzeugchassis (1) nach Anspruch 3, **dadurch gekennzeichnet, dass** die Dicke des Balkens (9) des Unterfahrschutzes < 3 x Dicke des dünnsten Bereiches der Heckquertraverse (5.1) ist.

5. Nutzfahrzeugchassis (1) nach einem der Anspruche 1 bis 4, **dadurch gekennzeichnet, dass** das Kompaktheck (7) mit der Heckquertraverse (5.1) und dem Balken (9) des Unterfahrschutzes in Nutzfahrzeugchassislängsrichtung verschiebbar ausgebildet ist und der Balken (9) aus seiner Lage unmittelbar hinter den heckseitigen Rädern (2) bzw. aus seiner Lage unmittelbar hinter den den heckseitigen Rädern (2) zugeordneten Radabdeckungen (3) zusammen mit der Heckquertraverse (5.1) aus ihrer eingeschobenen Lage in eine rückversetzte Lage überführbar ist und dass das Kompaktheck (7) mit der Heckquertraverse (5.1) und dem Balken (9) des Unterfahrschutzes Teil eines Kompaktheckausschubes sind.

6. Nutzfahrzeugchassis (1) nach einem der Ansprüche 1 bis 5, **dadurch gekennzeichnet, dass** der Balken (9) des Unterfahrschutzes über Konsolen (8) an der Heckquertraverse (5.1) oder an Längstraversen (4) mit vertikalem Abstand zu dieser gehaltert ist.

7. Nutzfahrzeugchassis (1) nach einem der Ansprüche 1 bis 6, **dadurch gekennzeichnet, dass** Heckleuchten des Nutzfahrzeugchassis in die Heckquertraverse (5.1) integriert sind.

## Claims

1. Utility vehicle chassis (1) having a chassis frame comprising axles with associated wheels (2), longitudinal members (4) and cross members (5), of which a rear cross member (5.1) terminating the chassis frame at the rear end is part of a chassis frame rear end (7) and the rear cross member (5.1) and at least one other cross member (5) have lock elements (5.2) for locking a payload (10), in particular a container, and the chassis frame rear end (7) comprising the rear cross member (5.1) is provided in the form of a compact rear end with an underride guard having a beam (9) disposed underneath the rear cross member (5.1), and the rear cross member (5.1) with its locks (5.2) extends in at least certain areas above rear-end wheels (2) and/or wheel covers (3) associated with rear-end wheels (2), and the beam (9) of the underride guard in certain areas is disposed directly behind rear-end wheels (2) and/or behind wheel covers (3) associated with the rear-end wheels (2), and the beam (9) of the underride guard is connected via at least three connecting elements (8) to the rear cross member (5.1), **characterised in that** at least two of the connecting elements (8) act on the beam (9) in a lateral outer region of the rear frame and the beam underride guard and at least one other connecting element of the rear cross member (5) is connected to the beam (9) of the underride guard in a middle region of the beam (9) of the underride guard.

2. Utility vehicle chassis (1) as claimed in claim 1, **characterised in that** the beam (9) of the underride guard is thinner than the rear cross member (5.1) and the beam (9) terminates at least approximately flush with the rear cross member (5.1) at the rear end.

3. Utility vehicle chassis (1) as claimed in one of claims 1 to 2, **characterised in that** the beam (9) of the underride guard has a uniform thickness across its entire length and hence across the width of the utility vehicle chassis (1).

4. Utility vehicle chassis (1) as claimed in claim 3, **characterised in that** the thickness of the beam (9) of the underride guard is < 3 x the thickness of the thinnest region of the rear cross member (5.1).

5. Utility vehicle chassis (1) as claimed in one of claims 1 to 4, **characterised in that** the compact rear end (7) is designed to be slidable with the rear cross member (5.1) and the beam (9) of the underride guard in the utility vehicle chassis longitudinal direction, and the beam (9) can be transferred from its position directly behind the rear-end wheels (2) respectively from its position directly behind the wheel covers (3) associated with the rear-end wheels (2), together with the rear cross member (5.1) from its retracted position, into an offset position, and the compact rear end (7) with the rear cross member (5.1) and the beam (9) of the underride guard are part of a compact rear end extension.

6. Utility vehicle chassis (1) as claimed in one of claims 1 to 5, **characterised in that** the beam (9) of the underride guard is retained on the rear cross member (5.1) or on longitudinal members (4) at a vertical distance therefrom by means of brackets (8).

7. Utility vehicle chassis (1) as claimed in one of claims 1 to 6, **characterised in that** rear lights of the utility vehicle chassis are integrated in the rear cross member (5.1).

## Revendications

1. Châssis de véhicule utilitaire (1) avec un cadre de châssis comprenant des essieux avec des roues (2), des traverses longitudinales (4) et des traverses transversales (5) associées, dont une traverse transversale arrière (5.1) qui ferme le cadre de châssis côté arrière fait partie d'une partie arrière de cadre de châssis (7) et la traverse transversale arrière (5.1) et au moins une autre traverse transversale (5) présentent des éléments de verrouillage (5.2) pour verrouiller une charge utile (10), en particulier un conteneur, dans lequel la partie arrière de cadre de châssis (7) comprenant la traverse arrière (5.1) est réalisée sous la forme d'une partie arrière compacte avec une barre anti-encastrement disposée en dessous de la traverse transversale arrière (5.1) et présentant une poutre (9), dans lequel la traverse arrière (5.1) s'étend avec ses verrouillages (5.2) au moins par endroits au-dessus des roues (2) côté arrière et/ou des caches-roues (3) associés aux roues (2) côté arrière, dans lequel la poutre (9) de la barre anti-encastrement est associée par endroits directement derrière les roues (2) côté arrière et/ou derrière les caches-roues associés aux roues (2) côté arrière et dans lequel la poutre (9) de la barre anti-encastrement est reliée à la traverse transversale arrière (5.1) par le biais d'au moins trois éléments de liaison (8), **caractérisé en ce qu'**au moins deux des éléments de liaison (8) mordent sur la poutre (9) dans une zone extérieure latérale du portique arrière et de la barre anti-encastrement de poutre et, dans une zone centrale de la poutre (9) de la barre anti-encastrement, au moins un autre élément de liaison de la traverse transversale arrière (5) est relié à la poutre (9) de la barre anti-encastrement.

2. Châssis de véhicule utilitaire (1) selon la revendication 1, **caractérisé en ce que** la poutre (9) de la barre anti-encastrement est réalisée plus mince que la traverse transversale arrière (5.1) et la poutre (9) ferme le côté arrière au moins de manière approximative avec la traverse transversale arrière (5.1) en affleurement avec le côté arrière.

3. Châssis de véhicule utilitaire (1) selon une des revendications 1 à 2, **caractérisé en ce que** la poutre (9) de la barre anti-encastrement présente une épaisseur régulière sur toute sa longueur et donc sur la largeur du châssis de véhicule utilitaire (1).

4. Châssis de véhicule utilitaire (1) selon la revendication 3, **caractérisé en ce que** l'épaisseur de la poutre (9) de la barre anti-encastrement est < 3 x épaisseur de la zone la plus mince de la traverse transversale arrière (5.1).

5. Châssis de véhicule utilitaire (1) selon une des revendications 1 à 4, **caractérisé en ce que** la partie arrière compacte (7) est réalisée mobile dans le sens de la longueur du châssis de véhicule utilitaire avec la traverse transversale arrière (5.1) et la poutre (9) de la barre anti-encastrement et la poutre (9) peut être déplacée de sa position directement derrière les roues (2) côté arrière, respectivement de sa position directement derrière les caches-roues (3) associés aux roues (2) côté arrière, conjointement avec la traverse transversale arrière (5.1), depuis sa position rentrée dans une position rétablie, et **en ce que** la partie arrière compacte (7) avec la traverse transversale arrière (5.1) et la poutre (9) de la barre anti-encastrement font partie d'un caisson de partie arrière compacte.

6. Châssis de véhicule utilitaire (1) selon une des revendications 1 à 5, **caractérisé en ce que** la poutre (9) de la barre anti-encastrement est maintenue par des consoles (8) à la traverse transversale arrière (5.1) ou à des traverses longitudinales (4) avec une distance verticale par rapport à celles-ci.

7. Châssis de véhicule utilitaire (1) selon une des revendications 1 à 6, **caractérisé en ce que** des lumières arrière du châssis de véhicule utilitaire sont intégrées dans la traverse transversale arrière (5.1).
